# EUROPEAN PATENT APPLICATION

(11) **EP 4 672 410 A1**
(43) Date of publication of application: **31.12.2025**
(21) Application number: 23944823.6
(22) Date of filing: 07.09.2023
(51) Int. Cl.: H01M 10/0567, H01M 10/0568, H01M 10/05, H01M 10/054

(54) **ELECTROLYTE, SECONDARY BATTERY AND ELECTRIC DEVICE**

(30) Priority: 07.07.2023 CN 202310833096
(71) Applicant: Contemporary Amperex Technology Co., Limited, Ningde, Fujian 352100 (CN)
(72) Inventor: WU, Kai, Ningde, Fujian 352100 (CN); LI, Xiaolong, Ningde, Fujian 352100 (CN); GUO, Bingkun, Ningde, Fujian 352100 (CN); ZHANG, Xinxin, Ningde, Fujian 352100 (CN); CHEN, Shigang, Ningde, Fujian 352100 (CN); YAO, Shikang, Ningde, Fujian 352100 (CN); LIU, Ben, Ningde, Fujian 352100 (CN); ZHOU, Qicheng, Ningde, Fujian 352100 (CN); LAN, Jiadian, Ningde, Fujian 352100 (CN)
(74) Representative: Lorenz Seidler Gossel Part. mbB
(86) International application number: PCT/CN2023/117436
(87) International publication number: WO 2025/010817

(57) **Abstract**

A secondary battery, an electrolyte, and an electric apparatus are provided. The secondary battery includes a positive electrode plate, an electrolyte, a separator, and a negative electrode current collector, where the electrolyte includes a non-aqueous solvent, an electrolytic salt, and an additive; the non-aqueous solvent includes an ether organic solvent; the additive includes a first additive; and the first additive includes one or more of a phosphite additive or a borate additive.

## Description

### CROSS-REFERENCE TO RELATED APPLICATIONS

This application claims priority to Chinese Patent Application No. 202310833096.9, filed on July 7, 2023 and entitled "ELECTROLYTE, SECONDARY BATTERY, AND ELECTRIC APPARATUS", which is incorporated herein by reference in its entirety.

### TECHNICAL FIELD

This application relates to the field of battery technology, and in particular, to an electrolyte, a secondary battery, and an electric apparatus.

### BACKGROUND

With the gradual expansion of lithium-ion battery technology in markets such as consumer electronics, electric vehicles, and energy storage, the issue of insufficient lithium resources has become increasingly prominent. Sodium-based batteries have gained attention due to the sufficient abundance of sodium on Earth and hold significant strategic importance in cost-sensitive application areas such as energy storage. Due to the higher reduction potential and larger relative molecular mass of sodium metal compared to lithium metal, the energy density of sodium-ion secondary batteries with similar operating principles is significantly lower than that of lithium-ion batteries. In addition, the larger ionic radius of sodium results in greater volume expansion during intercalation and deintercalation in positive and negative electrode materials, leading to reduced cyclic reversibility of the battery. These factors significantly limit the widespread application of sodium-ion secondary batteries. With advancements in electrolyte and additive technologies as well as surface modification techniques, the long-standing issue in academia of sodium dendrite growth caused by uneven deposition on metal surfaces has been significantly alleviated, and the product safety is expected to be improved significantly, bringing high-energy-density sodium metal negative electrodes back into focus.

However, due to the extremely high chemical reactivity, sodium metal is prone to violent reactions with the electrolyte to form a solid electrolyte interface film, posing significant challenges to the practical application of sodium metal negative electrodes.

### SUMMARY

This application provides an electrolyte, a secondary battery, and an electric apparatus to improve the cycling performance and coulombic efficiency of the secondary battery.

According to a first aspect of this application, a secondary battery is provided, including a positive electrode plate, an electrolyte, a separator, and a negative electrode current collector, where the electrolyte includes a non-aqueous solvent, an electrolytic salt, and an additive; the non-aqueous solvent includes an ether organic solvent; the additive includes a first additive; and the first additive includes one or more of a phosphite additive or a borate additive.

The above-mentioned first additive is introduced into the electrolyte with the ether organic solvent system, and the first additive forms a film on a positive electrode surface, effectively reducing the oxidative decomposition of the ether solvent on the positive electrode surface, thereby reducing the shuttling of oxidative decomposition products between positive and negative electrodes. In addition, the first additive is relatively stable with respect to sodium metal and can preferentially undergo oxidative decomposition on a surface of an oxide positive electrode to form a CEI film containing a boron or phosphorus compound. This suppresses the oxidative decomposition of the ether electrolyte on the positive electrode surface while protecting the structure of the positive electrode from damage, thereby improving the coulombic efficiency and cycling performance of the battery. In particular, the trivalent boron atom in the borate additive has an empty P-orbital, entirely exhibits Lewis acidity, can coordinate with anions to increase the transference number of lithium/sodium ions, and can also coordinate with oxygen atoms in the ether organic solvent molecules, reducing the charge density of oxygen in the solvent molecules, increasing the oxidation potential of the solvent, and further resisting oxidation of the ether organic solvent by the positive electrode active material.

In any embodiment of the first aspect, the secondary battery is a sodium-ion secondary battery.

In any embodiment of the first aspect, the secondary battery is an anode-free sodium secondary battery. Since the anode-free sodium secondary battery does not have pre-deposited sodium metal on a negative electrode side, the issues of degraded coulombic efficiency and cycling performance caused by violent reactions between sodium metal and the electrolyte can be effectively alleviated.

In any embodiment of the first aspect, the negative electrode current collector includes a conductive substrate and an optional conductive layer, where the conductive layer is disposed on at least one side of the conductive substrate; the conductive substrate includes any one of bare copper, an aluminum foil, an aluminum alloy foil, and an aluminum-based composite current collector; optionally, the conductive layer includes a conductive agent and a binder; and further optionally, the conductive agent includes graphite, graphene, carbon fiber, carbon black, soft carbon, hard carbon, multi-walled carbon nanotubes, or single-walled carbon nanotubes. The provision of the conductive layer facilitates the reduction and deposition of sodium ions by electrons on the negative electrode current collector during charging to form a sodium metal negative electrode.

In any embodiment of the first aspect, the above-mentioned ether organic solvent includes one or more of ethylene glycol diethyl ether (DEE), ethylene glycol dimethyl ether (DME or 1,2-dimethoxyethane), diethylene glycol dimethyl ether (DEGDME or diglyme), tetraethylene glycol dimethyl ether (TEGDME), triethylene glycol dimethyl ether (TRGDME), ethylene glycol ethyl methyl ether, ethylene glycol dibutyl ether (DBE), 1,3-dioxolane (DOL), 1,4-dioxane (1,4-dioxacyclohexane), tetrahydrofuran (THF), or methyltetrahydrofuran. The above-mentioned ether organic solvents have stable chemical structures, good fluidity, and high solubility for additives, which is more conducive to the effectiveness of the additives.

In any embodiment of the first aspect, optionally, the ether organic solvent includes ethylene glycol diethyl ether. Ethylene glycol diethyl ether has weaker interactions with anions and stronger oxidation resistance, making it more conducive to the effectiveness of the additives.

In any embodiment of the first aspect, optionally, a mass percentage of ethylene glycol diethyl ether in the electrolyte is greater than or equal to 30%, optionally 40% to 65%. Controlling the proportion of ethylene glycol diethyl ether in the electrolyte can effectively suppress capacity overcharge of the battery, improving the stability of the battery to high-voltage positive electrodes and the coulombic efficiency of the battery.

In any embodiment of the first aspect, the above-mentioned phosphite additive includes one or more of tris(trimethylsilyl) phosphite (TMSP), trimethyl phosphite, triethyl phosphite, tripropyl phosphite, tributyl phosphite, or triphenyl phosphite. The above-mentioned phosphite additive can more efficiently undergo oxidative decomposition on a surface of an oxide positive electrode to form a CEI film containing a phosphorus compound, more reliably suppressing the oxidative decomposition of the ether organic solvent on the positive electrode surface while protecting the structure of the positive electrode from damage.

In any embodiment of the first aspect, the above-mentioned borate additive includes any one or more of tris(trimethylsilyl) borate (TMSB), trimethyl borate (TMB), triethyl borate (TEB), tripropyl borate (TPB), tributyl borate (TBB), or triphenyl borate. The above-mentioned borate additive can more efficiently undergo oxidative decomposition on the surface of the oxide positive electrode to form a CEI film containing a boron compound, more reliably suppressing the oxidative decomposition of the ether organic solvent on the positive electrode surface while protecting the structure of the positive electrode from damage.

In any embodiment of the first aspect, the above-mentioned first additive includes tris(trimethylsilyl) phosphite and/or tris(trimethylsilyl) borate. When either of these two substances is used as the first additive, the formed CEI film is more stable, providing a relatively significant protection effect on the structure of the positive electrode.

In any embodiment of the first aspect, a mass percentage of the first additive in the above-mentioned electrolyte is 0.2% to 5%, optionally 0.2% to 3%. This allows the first additive to form a sufficient CEI film to protect the positive electrode and avoids excessive CEI film thickness, which otherwise increases internal resistance and affects the rate performance of the battery.

In any embodiment of the first aspect, the above-mentioned additive further includes a second additive, and the second additive includes a C2-C7 fluorinated alkyl ether additive. The second additive is introduced into the electrolyte, and the second additive forms a film on a negative electrode surface, effectively reducing the reduction of the above-mentioned oxidative decomposition products on the negative electrode surface, thereby suppressing the shuttling of the oxidative decomposition products between the positive and negative electrodes. In addition, the second additive reacts relatively weakly with sodium metal, and inorganic SEI components such as NaF formed by the reaction are distributed on a negative electrode to form a film, effectively suppressing the shuttling of the above-mentioned oxidative decomposition products between the positive and negative electrodes, thereby achieving the purpose of effectively improving the coulombic efficiency while improving the cycling performance of the battery.

In any embodiment of the first aspect, the above-mentioned C2-C7 fluorinated alkyl ether additive includes any one or more of 1,1,2,2-tetrafluoroethyl methyl ether, 2,2,3,3-tetrafluoropropyl methyl ether, 1,1,2,2-tetrafluoroethyl-2,2,2-trifluoroethyl ether, bis-(2,2,2-trifluoroethyl) ether, 1,1,2,2-tetrafluoroethyl-2,2,3,3-tetrafluoropropyl ether, methyl nonafluorobutyl ether, bis-(1,1,2,2-tetrafluoroethyl) ether, difluoromethyl-2,2,2-trifluoroethyl ether, 1,1,1,3,3,3-hexafluoro-2-(fluoromethoxy)propane, 1,1,2,3,3,3-pentafluoropropyl-2,2,2-trifluoroethyl ether, 2,2,3,3-tetrafluoropropyl difluoromethyl ether, 2,2,3,3-tetrafluoro-1-methoxypropane, 1,1,2,3,3,3-pentafluoropropyl ethyl ether, 1,1,2,2-tetrafluoroethyl ethyl ether, 1,1,2,3,3,3-hexafluoropropyl methyl ether, ethyl perfluorobutyl ether, ethyl nonafluorobutyl ether, heptafluoropropyl 1,2,2,2-tetrafluoroethyl ether, 1,1,2,3,3,3-pentafluoropropyl-2,2,2-trifluoroethyl ether, 2,2,3,3,3-pentafluoropropyl difluoromethyl ether, or 2,2,2-trifluoroethyl ethyl ether. The above-mentioned C2-C7 fluorinated alkyl ether additives react weakly with sodium metal, and the inorganic SEI components such as NaF formed by the reaction are distributed on the negative electrode, effectively suppressing the shuttling of the oxidative decomposition products of the electrolyte between the positive and negative electrodes, and better achieving the effect of suppressing capacity overcharge.

In any embodiment of the first aspect, the above-mentioned C2-C7 fluorinated alkyl ether additive is optionally one or more of methyl nonafluorobutyl ether, ethyl perfluorobutyl ether, ethyl nonafluorobutyl ether, 1,1,2,2-tetrafluoroethyl-2,2,2-trifluoroethyl ether, or 1,1,2,2-tetrafluoroethyl-2,2,3,3-tetrafluoropropyl ether, guaranteeing both high cycling performance and high capacity retention feature of the secondary battery.

In any embodiment of the first aspect, a mass percentage of the second additive in the above-mentioned electrolyte is 0.2% to 5%, optionally 0.2% to 2%. This allows the second additive to form a sufficient SEI film to protect the negative electrode and avoids excessive SEI film thickness, which otherwise increases internal resistance and affects the rate performance of the battery.

In any embodiment of the first aspect, the above-mentioned electrolytic salt includes one or more of sodium hexafluorophosphate (NaPF₆), sodium tetrafluoroborate (NaBF₄), sodium hexafluoroarsenate (NaAsF₆), sodium trifluoroacetate (CF₃COONa), sodium trifluoromethanesulfonate (CF₃NaO₃S or NaOTf), and sodium tetraphenylborate (NaBPh₄). At low temperatures, sodium trifluoromethanesulfonate has high solubility in the ether organic solvent, and the efficiency of sodium metal deposition and stripping is high, allowing the battery to have good cycling performance at low temperatures, for example (below -30°C). At room temperature, side reactions between sodium trifluoromethanesulfonate and the sodium metal negative electrode intensify, leading to degraded overall cycling performance of the battery. Using other electrolytic salts in the electrolyte can improve the cycling performance of the secondary battery at room temperature.

In any embodiment of the first aspect, the electrolyte includes a first sodium salt and sodium trifluoromethanesulfonate, where the first sodium salt includes any one or more of sodium hexafluorophosphate, sodium tetrafluoroborate, or sodium hexafluoroarsenate, thereby improving both the low-temperature cycling performance and room-temperature cycling performance of the secondary battery including the electrolyte.

In any embodiment of the first aspect, optionally, a mass percentage of sodium trifluoromethanesulfonate in the electrolyte is 2% to 10%; and optionally, a mass percentage of the first sodium salt in the electrolyte is 3% to 40%, optionally 5% to 30%.

When the electrolyte of this application includes sodium trifluoromethanesulfonate, sodium trifluoromethanesulfonate (NaOTf) has high solubility in diethylene glycol dimethyl ether at low temperatures. To further improve the ionic conductivity of the electrolyte at low temperatures, in any embodiment of the first aspect, optionally, the ether organic solvent includes diethylene glycol dimethyl ether, and further, a mass percentage of diethylene glycol dimethyl ether in the electrolyte is optionally greater than or equal to 20%, optionally 25% to 40%. Certainly, if the electrolyte does not include sodium trifluoromethanesulfonate, the ether organic solvent may also include diethylene glycol dimethyl ether.

In any embodiment of the first aspect, the mass percentage of sodium trifluoromethanesulfonate in the electrolyte is 2% to 10%; and optionally, the mass percentage of the first sodium salt in the electrolyte is 3% to 40%, optionally 5% to 30%, thereby better improving the low-temperature cycling performance and room-temperature cycling performance of the secondary battery.

In any embodiment of the first aspect, optionally, a mass ratio of sodium trifluoromethanesulfonate to diethylene glycol dimethyl ether is denoted as X, where 0.05 ≤ X ≤ 0.2, optionally 0.1 ≤ X ≤ 0.13, further improving the ionic conductivity of the electrolyte at low temperatures.

In any embodiment of the first aspect, the positive electrode active material of the positive electrode plate is a layered metal oxide; and optionally, the positive electrode active material includes one or more of oxides represented by a chemical formula NaₓMnₐQ_{b}O_{2-c-d}F_{c}, where 0.5 < x ≤ 1, 0 < a, 0 < b, 0 ≤ c ≤ 0.2, -0.1 ≤ d ≤ 0.1, and Q includes one or more of the following elements: Li, B, Mg, Al, Si, K, Ca, Ti, Fe, Co, Ni, Cu, Zn, Ga, Y, Zr, Nb, Mo, In, Sn, Sb, La, Ce, Ta, W, and Bi.

According to a second aspect of this application, an electrolyte is provided, including a non-aqueous solvent, an electrolytic salt, and an additive, where the non-aqueous solvent includes an ether organic solvent; and the additive includes a first additive, where the first additive includes one or more of a phosphite additive or a borate additive.

Taking an oxide as the positive electrode active material as an example, the technical effects of the above-mentioned electrolyte are described. The above-mentioned first additive is introduced into the electrolyte with the ether organic solvent system, and the first additive forms a film on a positive electrode surface, effectively reducing the oxidative decomposition of the ether solvent on the positive electrode surface, thereby reducing the shuttling of oxidative decomposition products between positive and negative electrodes. In addition, the first additive is relatively stable with respect to sodium metal and can preferentially undergo oxidative decomposition on a surface of an oxide positive electrode to form a CEI film containing a boron or phosphorus compound. This suppresses the oxidative decomposition of the ether electrolyte on the positive electrode surface while protecting the structure of the positive electrode from damage, thereby improving the coulombic efficiency and cycling performance of a battery. In particular, the trivalent boron atom in the borate additive has an empty P-orbital, entirely exhibits Lewis acidity, can coordinate with anions to increase the transference number of sodium ions, and can also coordinate with oxygen atoms in the ether organic solvent molecules, reducing the charge density of oxygen in the solvent molecules, increasing the oxidation potential of the solvent, and further resisting oxidation of the ether organic solvent by the positive electrode oxide.

In any embodiment of the second aspect, the above-mentioned ether organic solvent includes one or more of ethylene glycol diethyl ether (DEE), ethylene glycol dimethyl ether (DME or 1,2-dimethoxyethane), diethylene glycol dimethyl ether (DEGDME or diglyme), tetraethylene glycol dimethyl ether (TEGDME), triethylene glycol dimethyl ether (TRGDME), ethylene glycol ethyl methyl ether, ethylene glycol dibutyl ether (DBE), 1,3-dioxolane (DOL), 1,4-dioxane (1,4-dioxacyclohexane), tetrahydrofuran (THF), or methyltetrahydrofuran. The above-mentioned ether organic solvents have stable chemical structures, good fluidity, and high solubility for additives, which is more conducive to the effectiveness of the additives.

In any embodiment of the second aspect, optionally, the ether organic solvent includes ethylene glycol diethyl ether. Ethylene glycol diethyl ether has weaker interactions with anions and stronger oxidation resistance, making it more conducive to the effectiveness of the additives.

In any embodiment of the second aspect, optionally, a mass percentage of ethylene glycol diethyl ether in the electrolyte is greater than or equal to 30%, optionally 40% to 65%. Controlling the proportion of ethylene glycol diethyl ether in the electrolyte can effectively suppress capacity overcharge of the battery, improving the stability of the battery to high-voltage positive electrodes and the coulombic efficiency of the battery.

In any embodiment of the second aspect, the above-mentioned phosphite additive includes one or more of tris(trimethylsilyl) phosphite (TMSP), trimethyl phosphite, triethyl phosphite, tripropyl phosphite, tributyl phosphite, or triphenyl phosphite. The above-mentioned phosphite additive can more efficiently undergo oxidative decomposition on a surface of an oxide positive electrode to form a CEI film containing a phosphorus compound, more reliably suppressing the oxidative decomposition of the ether organic solvent on the positive electrode surface while protecting the structure of the positive electrode from damage.

In any embodiment of the second aspect, the above-mentioned borate additive includes any one or more of tris(trimethylsilyl) borate (TMSB), trimethyl borate (TMB), triethyl borate (TEB), tripropyl borate (TPB), tributyl borate (TBB), or triphenyl borate. The above-mentioned borate additive can more efficiently undergo oxidative decomposition on the surface of the oxide positive electrode to form a CEI film containing a boron compound, more reliably suppressing the oxidative decomposition of the ether organic solvent on the positive electrode surface while protecting the structure of the positive electrode from damage.

In any embodiment of the second aspect, the above-mentioned first additive includes tris(trimethylsilyl) phosphite and/or tris(trimethylsilyl) borate. When either of these two substances is used as the first additive, the formed CEI film is more stable, providing a relatively significant protection effect on the structure of the positive electrode.

In any embodiment of the second aspect, a mass percentage of the first additive in the above-mentioned electrolyte is 0.2% to 5%, optionally 0.2% to 3%. This allows the first additive to form a sufficient CEI film to protect the positive electrode and avoids excessive CEI film thickness, which otherwise increases internal resistance and affects the rate performance of the battery.

In any embodiment of the second aspect, the above-mentioned additive further includes a second additive, and the second additive includes a C2-C7 fluorinated alkyl ether additive. The second additive is introduced into the electrolyte, and the second additive forms a film on a negative electrode surface, effectively reducing the reduction of the above-mentioned oxidative decomposition products on the negative electrode surface, thereby suppressing the shuttling of the oxidative decomposition products between the positive and negative electrodes. In addition, the second additive reacts relatively weakly with sodium metal, and inorganic SEI components such as NaF formed by the reaction are distributed on a negative electrode to form a film, effectively suppressing the shuttling of the above-mentioned oxidative decomposition products between the positive and negative electrodes, thereby achieving the purpose of effectively improving the coulombic efficiency while improving the cycling performance of the battery.

In any embodiment of the second aspect, the above-mentioned C2-C7 fluorinated alkyl ether additive includes any one or more of 1,1,2,2-tetrafluoroethyl methyl ether, 2,2,3,3-tetrafluoropropyl methyl ether, 1,1,2,2-tetrafluoroethyl-2,2,2-trifluoroethyl ether, bis-(2,2,2-trifluoroethyl) ether, 1,1,2,2-tetrafluoroethyl-2,2,3,3-tetrafluoropropyl ether, methyl nonafluorobutyl ether, bis-(1,1,2,2-tetrafluoroethyl) ether, difluoromethyl-2,2,2-trifluoroethyl ether, 1,1,1,3,3,3-hexafluoro-2-(fluoromethoxy)propane, 1,1,2,3,3,3-pentafluoropropyl-2,2,2-trifluoroethyl ether, 2,2,3,3-tetrafluoropropyl difluoromethyl ether, 2,2,3,3-tetrafluoro-1-methoxypropane, 1,1,2,3,3,3-pentafluoropropyl ethyl ether, 1,1,2,2-tetrafluoroethyl ethyl ether, 1,1,2,3,3,3-hexafluoropropyl methyl ether, ethyl perfluorobutyl ether, ethyl nonafluorobutyl ether, heptafluoropropyl 1,2,2,2-tetrafluoroethyl ether, 1,1,2,3,3,3-pentafluoropropyl-2,2,2-trifluoroethyl ether, 2,2,3,3,3-pentafluoropropyl difluoromethyl ether, or 2,2,2-trifluoroethyl ethyl ether. The above-mentioned C2-C7 fluorinated alkyl ether additives react weakly with sodium metal, and the inorganic SEI components such as NaF formed by the reaction are distributed on the negative electrode, effectively suppressing the shuttling of oxidative decomposition products of the electrolyte between the positive and negative electrodes, and better achieving the effect of suppressing capacity overcharge.

In any embodiment of the second aspect, the above-mentioned C2-C7 fluorinated alkyl ether additive is optionally one or more of methyl nonafluorobutyl ether, ethyl perfluorobutyl ether, ethyl nonafluorobutyl ether, 1,1,2,2-tetrafluoroethyl-2,2,2-trifluoroethyl ether, or 1,1,2,2-tetrafluoroethyl-2,2,3,3-tetrafluoropropyl ether, guaranteeing both high cycling performance and high capacity retention feature of a secondary battery.

In any embodiment of the second aspect, a mass percentage of the second additive in the above-mentioned electrolyte is 0.2% to 5%, optionally 0.2% to 2%. This allows the second additive to form a sufficient SEI film to protect the negative electrode and avoids excessive SEI film thickness, which otherwise increases internal resistance and affects the rate performance of the battery.

In any embodiment of the second aspect, the above-mentioned electrolytic salt includes one or more of sodium hexafluorophosphate (NaPF₆), sodium tetrafluoroborate (NaBF₄), sodium hexafluoroarsenate (NaAsF₆), sodium trifluoroacetate (CF₃COONa), sodium trifluoromethanesulfonate (CF₃NaO₃S or NaOTf), and sodium tetraphenylborate (NaBPh₄). At low temperatures, sodium trifluoromethanesulfonate has high solubility in the ether organic solvent, and the efficiency of sodium metal deposition and stripping is high, allowing the battery to have good cycling performance at low temperatures, for example (below -30°C). At room temperature, side reactions between sodium trifluoromethanesulfonate and the sodium metal negative electrode intensify, leading to degraded overall cycling performance of the battery. Using other electrolytic salts in the electrolyte can improve the cycling performance of the secondary battery at room temperature.

In any embodiment of the second aspect, the electrolyte includes a first sodium salt and sodium trifluoromethanesulfonate, where the first sodium salt includes any one or more of sodium hexafluorophosphate, sodium tetrafluoroborate, or sodium hexafluoroarsenate, thereby improving both the low-temperature cycling performance and room-temperature cycling performance of the secondary battery including the electrolyte.

In any embodiment of the second aspect, optionally, a mass percentage of sodium trifluoromethanesulfonate in the electrolyte is 2% to 10%; and optionally, a mass percentage of the first sodium salt in the electrolyte is 3% to 40%, optionally 5% to 30%.

When the electrolyte of this application includes sodium trifluoromethanesulfonate, sodium trifluoromethanesulfonate (NaOTf) has high solubility in diethylene glycol dimethyl ether at low temperatures. To further improve the ionic conductivity of the electrolyte at low temperatures, in any embodiment of the first aspect, optionally, the ether organic solvent includes diethylene glycol dimethyl ether, and further, a mass percentage of diethylene glycol dimethyl ether in the electrolyte is optionally greater than or equal to 20%, optionally 25% to 40%. Certainly, if the electrolyte does not include sodium trifluoromethanesulfonate, the ether organic solvent may also include diethylene glycol dimethyl ether.

In any embodiment of the second aspect, the mass percentage of sodium trifluoromethanesulfonate in the electrolyte is 2% to 10%; and optionally, the mass percentage of the first sodium salt in the electrolyte is 3% to 40%, optionally 5% to 30%, thereby better improving the low-temperature cycling performance and room-temperature cycling performance of the secondary battery.

In any embodiment of the second aspect, optionally, a mass ratio of sodium trifluoromethanesulfonate to diethylene glycol dimethyl ether is denoted as X, where 0.05 ≤ X ≤ 0.2, optionally 0.1 ≤ X ≤ 0.13, further improving the ionic conductivity of the electrolyte at low temperatures.

According to a third aspect of this application, an electric apparatus is provided, including a secondary battery, where the secondary battery is the secondary battery according to any one of the embodiments of the first aspect.

### BRIEF DESCRIPTION OF DRAWINGS

To more clearly illustrate the technical solutions of the embodiments of this application, the drawings required for use in the embodiments of this application are briefly described below. It is apparent that the drawings described below are merely some embodiments of this application, and persons of ordinary skill in the art can obtain other drawings based on these drawings without creative effort.
FIG. 1 is a schematic diagram of a secondary battery according to an embodiment of this application.
FIG. 2 is an exploded view of the secondary battery according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus using a secondary battery as a power source according to an embodiment of this application.

In the drawings, the drawings are not drawn to actual scale.

### Description of reference signs:

1. battery pack; 2. upper box body; 3. lower box body; 4. battery module; 5. secondary battery; 51. housing; 52. electrode assembly; and 53. top cover assembly.

### DESCRIPTION OF EMBODIMENTS

The embodiments of this application are further described in detail below with reference to the drawings and embodiments. The detailed descriptions of the following embodiments and the drawings are used to exemplarily illustrate the principles of this application but are not intended to limit the scope of this application, that is, this application is not limited to the described embodiments.

Embodiments specifically disclosing a negative electrode plate, a secondary battery, and an electric apparatus of this application are described in detail with appropriate reference to the drawings. However, unnecessary detailed descriptions may be omitted. For example, detailed descriptions of well-known matters or redundant descriptions of substantially identical structures may be omitted. This is to avoid unnecessarily verbose descriptions and facilitate understanding by persons skilled in the art. In addition, the drawings and the following descriptions are provided to enable persons skilled in the art to fully understand this application and are not intended to limit the subject matter recited in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein, and "0-5" is just an abbreviated representation of a combination of these numbers. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, preferably sequentially. For example, a method including steps (a) and (b) indicates that the method may include steps (a) and (b) performed sequentially, or steps (b) and (a) performed sequentially. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, "include" and "contain" can mean that other unlisted components may also be included or contained, or only listed components are included or contained.

Unless otherwise specified, in this application, the term "or" is inclusive. For example, the phrase "A or B" means "A, B, or both A and B." More specifically, any of the following conditions satisfy the condition "A or B": A is true (or present) and B is false (or not present); A is false (or not present) and B is true (or present); or both A and B are true (or present).

### [Secondary battery]

A secondary battery, also known as a rechargeable battery or storage battery, refers to a battery that can be recharged after discharge to reactivate the active material for continued use.

Typically, a secondary battery includes a positive electrode plate, a negative electrode current collector (or a negative electrode plate), a separator, and an electrolyte. During the charging and discharging process of the battery, active ions (such as lithium ions or sodium ions) intercalate and deintercalate back and forth between the positive electrode plate and the negative electrode plate. The separator is disposed between the positive electrode plate and the negative electrode plate to mainly prevent short circuits between positive and negative electrodes and to allow the active ions to pass through. The electrolyte is located between the positive electrode plate and the negative electrode plate to mainly conduct active ions.

The secondary battery has the issues of degraded coulombic efficiency and insufficient cycling performance. To address the above issues, a first embodiment of this application provides a secondary battery including a positive electrode plate, an electrolyte, a separator, and a negative electrode current collector, where the electrolyte includes a non-aqueous solvent, an electrolytic salt, and an additive; the non-aqueous solvent includes an ether organic solvent; the additive includes a first additive; and the first additive includes one or more of a phosphite additive or a borate additive.

The above-mentioned first additive is introduced into the electrolyte with the ether organic solvent system, and the first additive forms a film on a positive electrode surface, effectively reducing the oxidative decomposition of the ether electrolyte on the positive electrode surface, thereby reducing the shuttling of oxidative decomposition products between positive and negative electrodes. In addition, the first additive is relatively stable with respect to sodium metal and can preferentially undergo oxidative decomposition on a surface of an oxide positive electrode to form a CEI film containing a boron or phosphorus compound. This suppresses the oxidative decomposition of the ether electrolyte on the positive electrode surface while protecting the structure of the positive electrode from damage, thereby improving the coulombic efficiency and cycling performance of the battery. In particular, the trivalent boron atom in the borate additive has an empty P-orbital, entirely exhibits Lewis acidity, can coordinate with anions to increase the transference number of lithium/sodium ions and can also coordinate with oxygen atoms in the ether organic solvent molecules, reducing the charge density of oxygen in the solvent molecules, increasing the oxidation potential of the solvent, and further resisting oxidation of the ether electrolyte by the positive electrode oxide.

The secondary battery of this application may be a lithium-ion secondary battery or a sodium-ion secondary battery. In some embodiments, the secondary battery is a sodium-ion secondary battery.

The above-mentioned sodium-ion secondary battery may be a conventional sodium-ion secondary battery with a negative electrode or an anode-free sodium secondary battery. The negative electrode of a conventional sodium-ion secondary battery with a negative electrode may be a conventional sodium metal negative electrode. To further achieve a higher cell energy density, an anode-free sodium secondary battery where sodium is deposited in situ on a negative electrode current collector from a positive electrode material, has also been studied.

An anode-free sodium secondary battery refers to a battery constructed without actively providing a negative electrode active material layer on a negative electrode side during the manufacturing process of the battery. For example, a negative electrode active material layer is not formed by applying or depositing sodium metal or a carbon active material at a negative electrode during the manufacturing process of the battery. During the first charge, sodium ions gain electrons on the negative electrode side and deposit as sodium metal on a surface of a current collector, forming a sodium metal phase. During discharge, sodium metal can transform back into sodium ions and return to a positive electrode, achieving charge and discharge cycles. Compared to other sodium secondary batteries, the anode-free sodium secondary battery, due to the absence of the negative electrode active material layer, can achieve a higher energy density.

In some embodiments, to improve the performance of the battery, the negative electrode side of the anode-free sodium secondary battery may be provided with some conventional materials that can serve as negative electrode active materials, such as carbon materials, metal oxides, and alloys. Although these materials have a certain capacity, these materials are provided in a small amount, and these materials are not used as primary negative electrode active materials in the battery (when the carbon materials are used, they can be considered as conductive materials), and no negative electrode active material layer for sodium intercalation is formed (for example, a conductive layer is formed). Such a sodium secondary battery can still be regarded as an anode-free sodium secondary battery.

In some embodiments, a CB value of the anode-free sodium secondary battery is less than or equal to 0.1. The CB value is a capacity per unit area of the negative electrode plate divided by a capacity per unit area of the positive electrode plate of the secondary battery. Since the anode-free battery contains no or only a small amount of negative electrode active materials, the capacity per unit area of the negative electrode plate is small, resulting in a CB value of the secondary battery less than or equal to 0.1.

In some embodiments of this application, the secondary battery is optionally an anode-free sodium metal secondary battery.

### [Negative electrode current collector]

In some embodiments of this application, the negative electrode current collector includes a conductive substrate and an optional conductive layer, where the conductive layer is disposed on at least one side of the conductive substrate. In some embodiments, the conductive layer is disposed on one surface or both opposite surfaces of the conductive substrate. The above-mentioned optional conductive layer indicates that a conductive layer may or may not be provided.

When the negative electrode current collector is used as a negative electrode of an anode-free sodium secondary battery, sodium metal requires to be deposited on the negative electrode current collector after the first charge to form a negative electrode plate. Thus, the subsequent formation of sodium metal can more effectively alleviate the issues caused by reactions between sodium metal and the electrolyte.

In some embodiments, the conductive substrate includes any one of bare copper, an aluminum foil, an aluminum alloy foil, and an aluminum-based composite current collector. The aluminum-based composite current collector includes a polymer base film and an aluminum foil and/or an aluminum alloy foil formed on both sides of the polymer base film. Specifically, the aluminum-based composite current collector has a "sandwich" structure, with the polymer base film in the middle and the aluminum foil on both sides, or the aluminum alloy foil on both sides, or the aluminum foil on one side and the aluminum alloy foil on the other side. The polymer base film includes any one of polyamide, polyethylene terephthalate, polyimide, polyethylene, polypropylene, polystyrene, polyvinyl chloride, acrylonitrile-butadiene-styrene copolymer, polybutylene terephthalate, poly-p-phenylene terephthamide, polypropylene, polyoxymethylene, epoxy resin, phenolic resin, polytetrafluoroethylene, polyvinylidene fluoride, silicone rubber, and polycarbonate. The aluminum-based composite current collector has better ductility, which is conducive to maintaining electrode integrity during sodium metal deposition/stripping.

In some embodiments, the conductive layer includes a conductive agent and a binder; and further optionally, the conductive agent includes any one or more of conductive carbon, a conductive polymer, and a conductive ceramic material. The conductive carbon includes but is not limited to graphite, graphene, carbon fiber, carbon black, carbon dots, soft carbon, hard carbon, multi-walled carbon nanotubes, or single-walled carbon nanotubes.

In some embodiments, the conductive layer further optionally includes a binder. For example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode current collector can be prepared as follows: the components used for preparing the negative electrode current collector, such as the conductive agent, binder, and any other components, are dispersed in a solvent (for example, deionized water) to form a conductive slurry; and the conductive slurry is applied on the substrate, followed by processes such as drying and cold pressing, to obtain the negative electrode current collector.

### [Electrolyte]

The electrolyte provided in some embodiments of this application includes a non-aqueous solvent, an electrolytic salt, and an additive, where the non-aqueous solvent includes an ether organic solvent; the additive includes a first additive; and the first additive includes one or more of a phosphite additive or a borate additive.

When the secondary battery in some embodiments of this application is a sodium-ion secondary battery, due to the extremely high chemical reactivity, sodium metal is prone to violent reactions with the electrolyte to form a solid electrolyte interface film, posing significant challenges to the practical application of sodium metal negative electrodes. For example, a conventional electrolyte containing carbonate additives such as FEC, DFEC, and VC preferentially reacts with a sodium metal negative electrode during charging, making it difficult to form an effective protective layer on a positive electrode surface, leading to reduced cycling stability of the battery. A conventional ether electrolyte coordinating with a sodium salt can achieve high reversibility in sodium metal deposition/stripping efficiency. However, an upper limit of a voltage window of ether electrolyte is low, especially when coordinating with a layered oxide positive electrode with a high proportion of transition metal elements, the catalytic effect of surface transition metal elements further exacerbates the decomposition of the ether electrolyte. On the other hand, during charging, oxidative decomposition products of the ether electrolyte (mainly the solvent) on the positive electrode shuttle to the sodium metal negative electrode, and then the oxidative decomposition products undergo reduction reactions and return to the positive electrode for oxidation. The back-and-forth oxidation-reduction shuttling formed in the ether electrolyte greatly reduces the energy conversion efficiency of the sodium-ion secondary battery, thereby affecting the cycling performance of the sodium-ion secondary battery. In addition, studies have found that the oxidative decomposition of the ether electrolyte on the positive electrode also causes the actual charging capacity of the sodium-ion secondary battery to be greater than the designed capacity, leading to capacity overcharge, which manifests as degraded coulombic efficiency in the sodium-ion secondary battery.

For the above-mentioned electrolyte, the above-mentioned first additive is introduced into the ether organic solvent system, and the first additive forms a film on a positive electrode surface, effectively reducing the oxidative decomposition of the ether electrolyte on the positive electrode surface, thereby reducing the shuttling of oxidative decomposition products between positive and negative electrodes. In addition, the first additive is relatively stable with respect to sodium metal and can preferentially undergo oxidative decomposition on a surface of an oxide positive electrode to form a CEI film containing a boron or phosphorus compound. This suppresses the oxidative decomposition of the ether electrolyte on the positive electrode surface while protecting the structure of the positive electrode from damage, thereby improving the coulombic efficiency and cycling performance of the battery. In particular, the trivalent boron atom in the borate additive has an empty P-orbital, entirely exhibits Lewis acidity, can coordinate with anions to increase the transference number of lithium/sodium ions, and can also coordinate with oxygen atoms in the ether organic solvent molecules, reducing the charge density of oxygen in the solvent molecules, increasing the oxidation potential of the solvent, and further resisting oxidation of the ether electrolyte by the positive electrode oxide.

The ether organic solvent of this application can be selected from commonly used ether organic solvents in electrolytes. In some embodiments, the above-mentioned ether organic solvent includes one or more of ethylene glycol diethyl ether (DEE), ethylene glycol dimethyl ether (DME or 1,2-dimethoxyethane), diethylene glycol dimethyl ether (DEGDME or diglyme), tetraethylene glycol dimethyl ether (TEGDME), triethylene glycol dimethyl ether (TRGDME), ethylene glycol ethyl methyl ether, ethylene glycol dibutyl ether (DBE), 1,3-dioxolane (DOL), 1,4-dioxane (1,4-dioxacyclohexane), tetrahydrofuran (THF), or methyltetrahydrofuran. The above-mentioned ether organic solvents have stable chemical structures, good fluidity, and high solubility for additives.

The oxidation resistance of the solvent in the electrolyte is determined by the interaction between the solvent molecules and anions. In the above-mentioned ether organic solvent, ethylene glycol diethyl ether has weaker interactions with anions and stronger oxidation resistance. In some embodiments, optionally, the ether organic solvent includes ethylene glycol diethyl ether. Controlling the proportion of ethylene glycol diethyl ether in the electrolyte can further effectively improve the oxidation resistance of the electrolyte to the positive electrode active material and effectively suppress capacity overcharge during charging of the battery, improving the stability of the battery to high-voltage positive electrodes and the coulombic efficiency of the battery. Therefore, optionally, a mass percentage of ethylene glycol diethyl ether in the electrolyte is greater than or equal to 30%, for example, 30%, 35%, 40%, 45%, 50%, 55%, 60%, 65%, 70%, 75%, 80%, or 85%, optionally 40% to 65%.

The phosphite additive used in this application may be a conventional phosphite additive for electrolytes. In some embodiments, the above-mentioned phosphite additive includes one or more of tris(trimethylsilyl) phosphite (TMSP), trimethyl phosphite, triethyl phosphite, tripropyl phosphite, tributyl phosphite, or triphenyl phosphite. The above-mentioned phosphite additive can more efficiently undergo oxidative decomposition on a surface of an oxide positive electrode to form a CEI film containing a phosphorus compound, more reliably suppressing the oxidative decomposition of the ether electrolyte on the positive electrode surface while protecting the structure of the positive electrode from damage.

The borate additive used in this application may be a conventional borate additive for electrolytes. In some embodiments, the above-mentioned borate additive includes any one or more of tris(trimethylsilyl) borate (TMSB), trimethyl borate (TMB), triethyl borate (TEB), tripropyl borate (TPB), tributyl borate (TBB), or triphenyl borate. The above-mentioned borate additive can more efficiently undergo oxidative decomposition on the surface of the oxide positive electrode to form a CEI film containing a boron compound, more reliably suppressing the oxidative decomposition of the ether electrolyte on the positive electrode surface while protecting the structure of the positive electrode from damage.

In some embodiments, the above-mentioned first additive includes tris(trimethylsilyl) phosphite and/or tris(trimethylsilyl) borate. When either of these two substances is used as the first additive, the formed CEI film is more stable, providing a relatively significant protection effect on the structure of the positive electrode.

In some embodiments, a mass percentage of the first additive in the above-mentioned electrolyte is 0.2% to 5%, for example, 0.2%, 0.5%, 1%, 1.5%, 2%, 2.5%, 3%, 3.5%, 4%, 4.5%, or 5%, optionally 0.2% to 3%. This allows the first additive to form a sufficient CEI film to protect the positive electrode and avoids excessive CEI film thickness, which otherwise increases internal resistance and affects the overcharge performance of the battery.

When the electrolyte of this application is applied to a sodium metal battery system, due to the extremely high chemical reactivity, sodium metal is prone to violent reactions with the electrolyte on the negative electrode side to form a solid electrolyte interface film, thereby reducing the efficiency and cycle life of the battery. In addition, this interface film is unstable; and during cycling, as sodium metal is deposited and stripped, the interface film is continuously cracked and reconstructed, causing a continuous increase in the internal resistance of the battery.

To address the above issues, in some embodiments, the above-mentioned additive further includes a second additive, and the second additive includes a C2-C7 fluorinated alkyl ether additive. The second additive is introduced into the electrolyte, and the second additive forms a film on a negative electrode surface, effectively reducing the reduction on the negative electrode surface of the oxidative decomposition products of the ether electrolyte on the positive electrode surface, thereby suppressing the shuttling of these products between the positive and negative electrodes. In addition, the second additive reacts relatively weakly with sodium metal, and inorganic SEI components such as NaF formed by the reaction are distributed on a negative electrode to form a film, effectively suppressing the shuttling of the above-mentioned oxidative decomposition products of the ether electrolyte between the positive and negative electrodes, and achieving a more effective suppression of capacity overcharge, thereby further improving the coulombic efficiency of the battery and further improving the cycling performance of the battery.

In some embodiments, the C2-C7 fluorinated alkyl ether additive used in this application includes but is not limited to any one or more of 1,1,2,2-tetrafluoroethyl methyl ether, 2,2,3,3-tetrafluoropropyl methyl ether, 1,1,2,2-tetrafluoroethyl-2,2,2-trifluoroethyl ether, bis-(2,2,2-trifluoroethyl) ether, 1,1,2,2-tetrafluoroethyl-2,2,3,3-tetrafluoropropyl ether, methyl nonafluorobutyl ether, bis-(1,1,2,2-tetrafluoroethyl) ether, difluoromethyl-2,2,2-trifluoroethyl ether, 1,1,1,3,3,3-hexafluoro-2-(fluoromethoxy)propane, 1,1,2,3,3,3-pentafluoropropyl-2,2,2-trifluoroethyl ether, 2,2,3,3-tetrafluoropropyl difluoromethyl ether, 2,2,3,3-tetrafluoro-1-methoxypropane, 1,1,2,3,3,3-pentafluoropropyl ethyl ether, 1,1,2,2-tetrafluoroethyl ethyl ether, 1,1,2,3,3,3-hexafluoropropyl methyl ether, ethyl perfluorobutyl ether, ethyl nonafluorobutyl ether, heptafluoropropyl 1,2,2,2-tetrafluoroethyl ether, 1,1,2,3,3,3-pentafluoropropyl-2,2,2-trifluoroethyl ether, 2,2,3,3,3-pentafluoropropyl difluoromethyl ether, or 2,2,2-trifluoroethyl ethyl ether.

The above-mentioned C2-C7 fluorinated alkyl ether additives react weakly with sodium metal, and the inorganic SEI components such as NaF formed by the reaction are distributed on the negative electrode, effectively suppressing the shuttling of the oxidative decomposition products of the ether electrolyte between the positive and negative electrodes, better achieving the effect of suppressing capacity overcharge, and further improving the coulombic efficiency of the battery.

One of the main roles of the above-mentioned C2-C7 fluorinated alkyl ether additive is to form an SEI film on the negative electrode. Therefore, higher film-forming activity is more conducive to SEI film formation, but higher film-forming activity consumes more negative electrode capacity. To guarantee both high cycling performance and high capacity retention feature of the secondary battery, in some embodiments, the above-mentioned C2-C7 fluorinated alkyl ether additive is optionally one or more of methyl nonafluorobutyl ether, ethyl perfluorobutyl ether, ethyl nonafluorobutyl ether, 1,1,2,2-tetrafluoroethyl-2,2,2-trifluoroethyl ether, or 1,1,2,2-tetrafluoroethyl-2,2,3,3-tetrafluoropropyl ether.

The amount of the above-mentioned second additive in the electrolyte can refer to conventional techniques. In some embodiments, a mass percentage of the second additive in the above-mentioned electrolyte is 0.2% to 5%, for example, 0.2%, 0.5%, 1%, 1.5%, 2%, 2.5%, 3%, 3.5%, 4%, 4.5%, or 5%, optionally 0.2% to 2%. This allows the second additive to form a sufficient SEI film to protect the negative electrode and avoids excessive SEI film thickness, which otherwise increases internal resistance and affects the alleviation in the capacity overcharge of the battery.

The electrolytic salt used in this application can be selected from electrolytic salts commonly used in conventional secondary batteries. For example, in some embodiments, when the secondary battery is a lithium-ion secondary battery, the above-mentioned electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, when the electrolyte is applied to a sodium-ion secondary battery, the above-mentioned electrolytic salt includes one or more of sodium hexafluorophosphate (NaPF₆), sodium tetrafluoroborate (NaBF₄), sodium hexafluoroarsenate (NaAsF₆), sodium trifluoroacetate (CF₃COONa), sodium trifluoromethanesulfonate (CF₃NaO₃S or NaOTf), and sodium tetraphenylborate (NaBPh₄).

At low temperatures, sodium trifluoromethanesulfonate has high solubility in an ether organic solvent, and the efficiency of sodium metal deposition and stripping is high, allowing the battery to have good cycling performance of the battery at low temperatures, for example (below -30°C). At room temperature, side reactions between sodium trifluoromethanesulfonate and the sodium metal negative electrode intensify, leading to degraded overall cycling performance of the battery. Using other electrolytic salts in the electrolyte can improve the cycling performance of the secondary battery at room temperature.

In some embodiments, optionally, the electrolyte includes a first sodium salt and sodium trifluoromethanesulfonate, where the first sodium salt includes any one or more of sodium hexafluorophosphate, sodium tetrafluoroborate, or sodium hexafluoroarsenate, thereby improving both the low-temperature cycling performance and room-temperature cycling performance of the secondary battery including this electrolyte.

In some embodiments, optionally, a mass percentage of sodium trifluoromethanesulfonate in the electrolyte is 2% to 10%, for example, 2%, 3%, 4%, 5%, 6%, 7%, 8%, 9%, or 10%, optionally 2% to 5%; and optionally, a mass percentage of the first sodium salt in the electrolyte is 3% to 40%, for example, 3%, 5%, 10%, 15%, 20%, 25%, 30%, 35%, or 40%, optionally 5% to 30%.

When the electrolyte of this application includes sodium trifluoromethanesulfonate, sodium trifluoromethanesulfonate (NaOTf) has high solubility in diethylene glycol dimethyl ether at low temperatures. To further improve the ionic conductivity of the electrolyte at low temperatures, in some embodiments, optionally, the ether organic solvent includes diethylene glycol dimethyl ether, and further, a mass percentage of diethylene glycol dimethyl ether in the electrolyte is optionally greater than or equal to 20%, for example, 20%, 25%, 30%, 35%, 40%, 45%, 50%, 55%, 60%, 65%, 70%, 75%, 80%, or 85%, optionally 25% to 40%. Certainly, if the electrolyte does not include sodium trifluoromethanesulfonate, the ether organic solvent may also include diethylene glycol dimethyl ether.

In some embodiments, the mass percentage of sodium trifluoromethanesulfonate in the electrolyte is 2% to 10%, for example, 2%, 3%, 4%, 5%, 6%, 7%, 8%, 9%, or 10%; and optionally, the mass percentage of the first sodium salt in the electrolyte is 3% to 40%, for example, 3%, 5%, 10%, 15%, 20%, 25%, 30%, 35%, or 40%, optionally 5% to 30%, thereby better improving the low-temperature cycling performance and room-temperature cycling performance of the secondary battery.

In some embodiments, to further improve the ionic conductivity of the electrolyte at low temperatures, optionally, a mass ratio of sodium trifluoromethanesulfonate to diethylene glycol dimethyl ether is denoted as X, where 0.05 ≤ X ≤ 0.2. For example, a minimum value of X may be 0.05, 0.08, or 0.1, and a maximum value of X may be 0.12, 0.125, 0.13, 0.15, 0.17, or 0.2, optionally 0.1 ≤ X ≤ 0.13, thereby improving the low-temperature cycling performance of the battery.

### [Positive electrode plate]

The positive electrode plate typically includes a positive electrode current collector and a positive electrode film layer disposed on at least one surface of the positive electrode current collector, where the positive electrode film layer includes a positive electrode active material.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, as a metal foil, an aluminum foil may be used. The composite current collector may include a polymer matrix and a metal layer formed on at least one surface of the polymer matrix. The composite current collector may be formed by forming a metal material (for example, aluminum, aluminum alloy, nickel, nickel alloy, titanium, titanium alloy, silver, or silver alloy) on a polymer matrix (for example, a matrix of polypropylene (PP), polyethylene terephthalate (PET), polybutylene terephthalate (PBT), polystyrene (PS), or polyethylene (PE)).

When the secondary battery is a sodium-ion secondary battery, the positive electrode active material of the positive electrode plate is a layered metal oxide. In some embodiments, the above-mentioned positive electrode active material includes one or more selected from a group consisting of oxides represented by a chemical formula NaₓMnₐQ_{b}O_{2-c-d}F_{c}, where 0.5 < x ≤ 1, 0 < a, 0 < b, 0 ≤ c ≤ 0.2, -0.1 ≤ d ≤ 0.1, and Q includes one or more of the following elements: Li, B, Mg, Al, Si, K, Ca, Ti, Fe, Co, Ni, Cu, Zn, Ga, Y, Zr, Nb, Mo, In, Sn, Sb, La, Ce, Ta, W, and Bi, for example, NaNi_{1/3}Fe_{1/3}Mn_{1/3}O₂.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate can be prepared as follows: the components used for preparing the positive electrode plate, such as the positive electrode active material, conductive agent, binder, and any other components, are dispersed in a solvent (for example, N-methylpyrrolidone) to form a positive electrode slurry; and the positive electrode slurry is applied on the positive electrode current collector, followed by processes such as drying and cold pressing, to obtain the positive electrode plate.

### [Separator]

In some embodiments, the secondary battery further includes a separator. This application has no particular limitation on the type of the separator, and any well-known porous separator with good chemical and mechanical stability may be used.

In some embodiments, the material of the separator may be selected from at least one of glass fiber, non-woven fabric, polyethylene, polypropylene, and polyvinylidene fluoride. The separator may be a single-layer film or a multilayer composite film, with no particular limitation. When the separator is a multilayer composite film, the materials of the layers may be the same or different, with no particular limitation.

In some embodiments, the positive electrode plate, the negative electrode plate, and the separator can be formed into an electrode assembly through a winding process or a lamination process.

In some embodiments, the secondary battery includes a secondary battery cell, a battery module, or a battery pack, and may include an outer package. The outer package may be used to encapsulate the above-mentioned electrode assembly and electrolyte.

In some embodiments, the outer package of the secondary battery may be a hard shell, for example, a hard plastic shell, an aluminum shell, or a steel shell. The outer package of the secondary battery cell may alternatively be a soft pack, for example, a soft pouch. The material of the soft pack may be plastic. As the plastic, polypropylene, polybutylene terephthalate, polybutylene succinate, and the like may be listed.

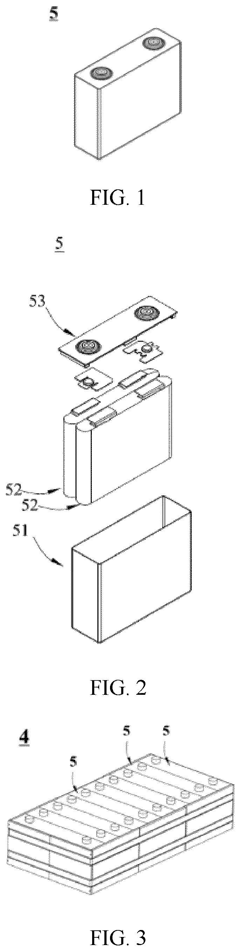

This application has no particular limitation on the shape of the secondary battery. The secondary battery may be cylindrical, rectangular, or of any other shapes. For example, FIG. 1 shows a secondary battery cell 5 with a rectangular structure as an example.

In some embodiments, referring to FIG. 2, the outer package may include a housing 51 and a cover plate 53. The housing 51 may include a bottom plate and side plates connected to the bottom plate, with the bottom plate and side plates enclosing to form an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through a winding process or a lamination process. The electrode assembly 52 is encapsulated in the accommodating cavity. The electrolyte infiltrates the electrode assembly 52. The secondary battery cell 5 may include one or more electrode assemblies 52, and persons skilled in the art may select based on specific actual needs.

In some embodiments, the secondary battery cell may be assembled into a battery module, and the battery module may include one or more battery cells. The specific quantity may be chosen by persons skilled in the art according to the application and capacity of the battery module.

FIG. 3 shows a battery module 4 as an example. Referring to FIG. 3, in the battery module 4, multiple secondary battery cells 5 may be arranged sequentially along a length direction of the battery module 4. Certainly, the secondary battery cells may alternatively be arranged in any other manners. Further, the multiple secondary battery cells 5 may be fixed by fasteners.

Optionally, the battery module 4 may further include an enclosure with an accommodating space, and the multiple secondary battery cells 5 are accommodated in the accommodating space.

In some embodiments, the battery module may be further assembled into a battery pack, and the battery pack may include one or more battery modules. The specific quantity may be chosen by persons skilled in the art according to the application and capacity of the battery pack.

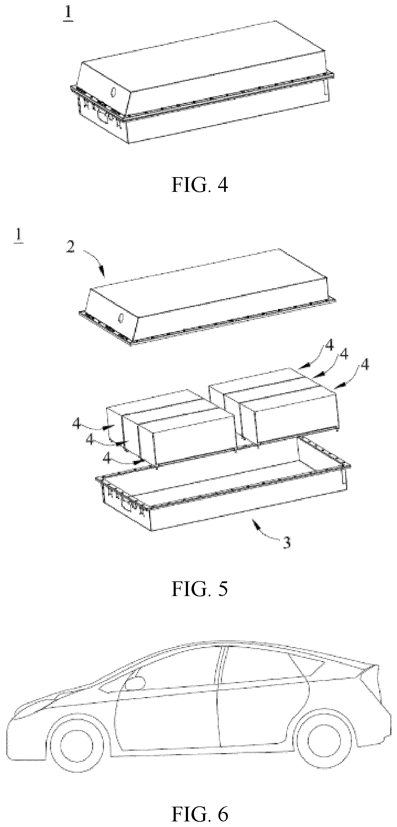

FIG. 4 and FIG. 5 show a battery pack 1 as an example. Referring to FIG. 4 and FIG. 5, the battery pack 1 may include a battery box and multiple battery modules 4 disposed in the battery box. The battery box includes an upper box body 2 and a lower box body 3, where the upper box body 2 can fit the lower box body 3 to form a closed space for accommodating the battery modules 4. The multiple battery modules 4 may be arranged in the battery box in any manner.

Additionally, this application further provides an electric apparatus. The electric apparatus includes the sodium-ion secondary battery provided in this application. The sodium-ion secondary battery may be used as a power source for the electric apparatus or as an energy storage unit for the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

As the electric apparatus, the specific form of the secondary battery, for example, a secondary battery cell, a battery module, or a battery pack, can be selected based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy requirements of the electric apparatus for high power and high energy density of a secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### (1) Electrolyte

In an argon atmosphere glove box (with H₂O < 0.1 ppm and O₂ < 0.1 ppm), according to the electrolyte formulation of Example 1, sodium trifluoromethanesulfonate (NaTOf) and sodium hexafluorophosphate (NaPF₆) were dissolved in diethylene glycol dimethyl ether and ethylene glycol diethyl ether (DEE), and tris(trimethylsilyl) phosphite and methyl nonafluorobutyl ether were added and stirred well, followed by mixing, to prepare an electrolyte.

### (2) Preparation of positive electrode plate

A positive electrode active material NaNi_{1/3}Fe_{1/3}Mn_{1/3}O₂, a binder polyvinylidene fluoride (PVDF), and a conductive agent conductive carbon black (Super-P) were mixed well in a solvent N-methylpyrrolidone (NMP) at a mass ratio of 96:2:2 to form a positive electrode slurry. The positive electrode slurry was applied on a surface of an aluminum foil using an extrusion coater according to a mass per unit area requirement of the positive electrode active material and dried. The coated electrode plate was then cold-pressed using a cold press at a design pressure density of 2.5 g/cm³ to prepare a final positive electrode plate.

### (3) Preparation of negative electrode current collector

Single-walled carbon nanotubes and sodium alginate were added to deionized water and stirred to form a uniform slurry. The slurry was applied on an aluminum foil and dried to form a conductive layer, followed by cutting to obtain a negative electrode current collector without a negative electrode structure, where an areal density of the conductive layer was 25 g/m².

### (4) Separator

A polypropylene film was used as the separator.

### (5) Battery preparation

The positive electrode plate, the separator, and the negative electrode current collector are wound or stacked in sequence, where the separator was located between the positive electrode plate and the negative electrode current collector to provide isolation. Tabs were welded to a jelly roll, and the jelly roll was placed in an aluminum shell and baked at 80°C to remove water, followed by injection of the electrolyte and sealing, to obtain an uncharged battery. The uncharged battery undergone processes such as standing, hot and cold pressing, formation, shaping, and capacity testing to obtain a sodium secondary battery product in Example 1.

The compositions of the electrolytes in Examples 2 to 30 and Comparative Examples 1 to 3 are shown in Table 1, with the rest being the same as Example 1.

**Table 1**

| | Ether organic solvent | | First additive | | Second additive | | Electrolytic salt | |
|---|---|---|---|---|---|---|---|---|
| | Ethylene glycol diethyl ether/mass percentage (%) | Diethylene glycol dimethyl ether/mass percentage (%) | Substance | Mass percentage (%) | Substance | Mass percentage (%) | Electrolytic salt and mass percentage (%) | Electrolytic salt and mass percentage (%) |
| Example 1 | 47 | 40 | Tris(trimethylsilyl) phosphite | 1 | Methyl nonafluorobutyl ether | 2 | Sodium trifluoromethanesulfonate, 5 | Sodium hexafluorophosphate, 5 |
| Example 2 | 45 | 40 | Tris(trimethylsilyl) phosphite | 3 | Methyl nonafluorobutyl ether | 2 | Sodium trifluoromethanesulfonate, 5 | Sodium hexafluorophosphate, 5 |
| Example 3 | 42 | 40 | Tris(trimethylsilyl) phosphite | 6 | Methyl nonafluorobutyl ether | 2 | Sodium trifluoromethanesulfonate, 5 | Sodium hexafluorophosphate, 5 |
| Example 4 | 41 | 40 | Tris(trimethylsilyl) phosphite | 5 | Methyl nonafluorobutyl ether | 2 | Sodium trifluoromethanesulfonate, 5 | Sodium hexafluorophosphate, 5 |
| Example 5 | 49.8 | 40 | Tris(trimethylsilyl) phosphite | 0.2 | Methyl nonafluorobutyl ether | 2 | Sodium trifluoromethanesulfonate, 5 | Sodium hexafluorophosphate, 5 |
| Example 6 | 47 | 40 | Triethyl borate | 1 | Methyl nonafluorobutyl ether | 2 | Sodium trifluoromethanesulfonate, 5 | Sodium hexafluorophosphate, 5 |
| Example 7 | 47 | 40 | Triphenyl borate | 1 | Methyl nonafluorobutyl ether | 2 | Sodium trifluoromethanesulfonate, 5 | Sodium hexafluorophosphate, 5 |
| Example 8 | 47 | 40 | Tris(trimethylsilyl) borate | 1 | Methyl nonafluorobutyl ether | 2 | Sodium trifluoromethanesulfonate, 5 | Sodium hexafluorophosphate, 5 |
| Example 9 | 49.8 | 40 | Tris(trimethylsilyl) phosphite | 1 | Methyl nonafluorobutyl ether | 0.2 | Sodium trifluoromethanesulfonate, 5 | Sodium hexafluorophosphate, 5 |
| Example 10 | 48 | 40 | Tris(trimethylsilyl) borate | 1 | Methyl nonafluorobutyl ether | 1 | Sodium trifluoromethanesulfonate, 5 | Sodium hexafluorophosphate, 5 |
| Example 11 | 44 | 40 | Tris(trimethylsilyl) phosphite | 1 | Methyl nonafluorobutyl ether | 5 | Sodium trifluoromethanesulfonate, 5 | Sodium hexafluorophosphate, 5 |
| Example 12 | 42 | 40 | Tris(trimethylsilyl) phosphite | 1 | Methyl nonafluorobutyl ether | 7 | Sodium trifluoromethanesulfonate, 5 | Sodium hexafluorophosphate, 5 |
| Example 13 | 47 | 40 | Tris(trimethylsilyl) phosphite | 1 | Ethyl perfluorobutyl ether | 2 | Sodium trifluoromethanesulfonate, 5 | Sodium hexafluorophosphate, 5 |
| Example 14 | 47 | 40 | Tris(trimethylsilyl) phosphite | 1 | Bis-(2,2,2-trifluoroethyl) ether | 2 | Sodium trifluoromethanesulfonate, 5 | Sodium hexafluorophosphate, 5 |
| Example 15 | 47 | 40 | Tris(trimethylsilyl) phosphite | 1 | Difluoromethyl-2,2,2-trifluoroethyl ether | 2 | Sodium trifluoromethanesulfonate, 5 | Sodium hexafluorophosphate, 5 |
| Example 16 | 47 | 40 | Tris(trimethylsilyl) phosphite | 1 | 1,1,2,2-tetrafluoroethyl-2,2,2-trifluoroethyl ether | 2 | Sodium trifluoromethanesulfonate, 5 | Sodium hexafluorophosphate, 5 |
| Example 17 | 47 | 40 | Tris(trimethylsilyl) phosphite | 1 | Methyl nonafluorobutyl ether | 2 | Sodium trifluoromethanesulfonate, 2 | Sodium hexafluorophosphate, 8 |
| Example 18 | 37 | 45 | Tris(trimethylsilyl) phosphite | 1 | Methyl nonafluorobutyl ether | 2 | Sodium trifluoromethanesulfonate, 10 | Sodium hexafluorophosphate, 5 |
| Example 19 | 62 | 25 | Tris(trimethylsilyl) phosphite | 1 | Methyl nonafluorobutyl ether | 2 | Sodium trifluoromethanesulfonate, 5 | Sodium hexafluorophosphate, 5 |
| Example 20 | 47 | Tetrahydrofuran, 40 | Tris(trimethylsilyl) phosphite | 1 | Methyl nonafluorobutyl ether | 2 | None | Sodium hexafluorophosphate, 10 |
| Example 21 | 49 | 10 | Tris(trimethylsilyl) phosphite | 1 | Methyl nonafluorobutyl ether | 2 | None | Sodium hexafluorophosphate, 40 |
| Example 22 | 46.8 | 10 | Tris(trimethylsilyl) phosphite | 1 | Methyl nonafluorobutyl ether | 2 | Sodium trifluoromethanesulfonate, 1 | Sodium hexafluorophosphate, 40 |
| Example 23 | 47 | 40 | Tris(trimethylsilyl) phosphite | 1 | Methyl nonafluorobutyl ether | 2 | Sodium trifluoromethanesulfonate, 5 | Sodium tetrafluoroborate, 5 |
| Example 24 | 47 | 40 | Tris(trimethylsilyl) phosphite | 1 | Methyl nonafluorobutyl ether | 2 | Sodium trifluoromethanesulfonate, 5 | Sodium hexafluoroarsenate, 5 |
| Example 25 | 0 | 87 | Tris(trimethylsilyl) phosphite | 1 | Methyl nonafluorobutyl ether | 2 | Sodium trifluoromethanesulfonate, 5 | Sodium hexafluorophosphate, 5 |
| Example 26 | 87 | 0 | Tris(trimethylsilyl) phosphite | 1 | Methyl nonafluorobutyl ether | 2 | Sodium trifluoromethanesulfonate, 5 | Sodium hexafluorophosphate, 5 |
| Example 27 | 27 | 60 | Tris(trimethylsilyl) phosphite | 1 | Methyl nonafluorobutyl ether | 2 | Sodium trifluoromethanesulfonate, 5 | Sodium hexafluorophosphate, 5 |
| Example 28 | 40 | 40 | Tris(trimethylsilyl) phosphite | 5 | None | 0 | Sodium trifluoromethanesulfonate, 5 | Sodium hexafluorophosphate, 5 |
| Example 29 | 49 | 10 | Tris(trimethylsilyl) phosphite | 3 | None | 0 | None | Sodium hexafluorophosphate, 40 |
| Example 30 | Ethylene glycol dimethyl ether, 47 | 40 | Tris(trimethylsilyl) phosphite | 1 | Methyl nonafluorobutyl ether | 2 | Sodium trifluoromethanesulfonate, 5 | Sodium hexafluorophosphate, 5 |
| Comparative Example 1 | 40 | 40 | None | 0 | Methyl nonafluorobutyl ether | 3 | Sodium trifluoromethanesulfonate, 5 | Sodium hexafluorophosphate, 5 |
| Comparative Example 2 | Ethyl methyl carbonate, 77 | | | Tris(trimethylsily l) phosphite | 1 | Methyl nonafluorobutyl ether | 2 | Sodium trifluoromethanesulfonate, 5 |
| Comparative Example 3 | Ethyl methyl carbonate, 77 | | | Tris(trimethylsily l) borate | 1 | Methyl nonafluorobutyl ether | 2 | Sodium trifluoromethanesulfonate, 5 |

### Tests:

### (1) Test of average coulombic efficiency

At 25°C and normal pressure (0.1 MPa), the battery was charged to 3.8 V at a constant current of 0.1C, where a charge capacity at this point was recorded as a charge capacity of the battery. Then, the battery was left standing for 5 min, discharged to a discharge of 2.2 V at a constant current of 0.1C, and then left standing for 5 min, where a discharge capacity at this point was recorded as a discharge capacity of the battery. A coulombic efficiency (%) = the discharge capacity / the charge capacity × 100%. After 400 charge and discharge cycles, an average coulombic efficiency of the battery was calculated.

### (2) Room-temperature cycling performance

At 25°C and normal pressure (0.1 MPa), the battery was charged to a voltage of 3.8 V at a constant current of 0.1C and then discharged to 2.2 V at a constant current of 0.1C. This process was used as one charge and discharge cycle. With a first-cycle discharge capacity as 100%, 400 charge and discharge cycles were performed, and the test as stopped. A cycling capacity retention rate was recorded, and a room-temperature capacity retention rate was used as an indicator to evaluate the room-temperature cycling performance of the battery.

### (3) Low-temperature cycling performance

At -30°C and normal pressure (0.1 MPa), the battery was charged to a voltage of 3.8 V at a constant current of 0.1C and then discharged to 2.2 V at a constant current of 0.1C. This process was used as one charge and discharge cycle. With a first-cycle discharge capacity as 100%, 200 charge and discharge cycles were performed, and the test was stopped. A cycling capacity retention rate was recorded, and a low-temperature capacity retention rate was used as an indicator to evaluate the low-temperature cycling performance of the battery.

The test results were recorded in Table 2.

**Table 2**

| | Low-temperature cycling performance (capacity retention rate after 200 cycles at -30°C) | Room-temperature cycling performance (capacity retention rate after 400 cycles) | Coulombic efficiency |
|---|---|---|---|
| Example 1 | 88.73% | 86.32% | 99.95% |
| Example 2 | 86.74% | 83.28% | 99.93% |
| Example 3 | 64.32% | 63.27% | 99.91% |
| Example 4 | 72.01% | 73.46% | 99.92% |
| Example 5 | 68.15% | 70.11% | 99.92% |
| Example 6 | 80.24% | 78.64% | 99.94% |
| Example 7 | 79.16% | 77.13% | 99.95% |
| Example 8 | 86.93% | 85.49% | 99.95% |
| Example 9 | 71.86% | 70.66% | 90.63% |
| Example 10 | 85.46% | 83.26% | 99.94% |
| Example 11 | 70.02% | 68.74% | 92.14% |
| Example 12 | 65.43% | 62.16% | 86.19% |
| Example 13 | 87.93% | 84.26% | 99.16% |
| Example 14 | 86.29% | 83.69% | 99.63% |
| Example 15 | 84.33% | 81.57% | 99.54% |
| Example 16 | 85.26% | 82.49% | 99.87% |
| Example 17 | 67.83% | 84.33% | 99.27% |
| Example 18 | 86.99% | 67.93% | 99.78% |
| Example 19 | 66.23% | 76.33% | 99.67% |
| Example 20 | No cycling | 80.16% | 99.87% |
| Example 21 | No cycling | 80.22% | 99.86% |
| Example 22 | 58.74% | 84.69% | 99.34% |
| Example 23 | 87.69% | 84.77% | 99.31% |
| Example 24 | 88.23% | 85.61% | 99.76% |
| Example 25 | 72.48% | 77.21% | 87.28% |
| Example 26 | No cycling | 80.11% | 99.47% |
| Example 27 | 76.53% | 81.22% | 98.76% |
| Example 28 | 53.26% | 50.16% | 86.33% |
| Example 29 | No cycling | 57.22% | 82.03% |
| Example 30 | 70.12% | 76.34% | 87.22% |
| Comparative Example 1 | 50.63% | 48.79% | 86.95% |
| Comparative Example 2 | 16.78% | 22.29% | 32.19% |
| Comparative Example 3 | 18.96% | 21.56% | 30.66% |

Based on the comparison of data from the Examples and Comparative Examples 1 to 3, it can be seen that the combination of the first additive, second additive, and ether organic solvent in the electrolyte of this application significantly improves the low-temperature cycling performance, room-temperature cycling performance, and coulombic efficiency of the sodium battery (a higher coulombic efficiency indicates a more significant alleviation in capacity overcharge).

Based on the comparison of data from Examples 1 to 5, it can be seen that changes in the amount of the first additive directly affect the low-temperature cycling performance and room-temperature cycling performance of the battery, but the coulombic efficiency remains basically unchanged. Either an excessively low amount of the first additive (in Example 5) or an excessively high amount of the first additive (in Example 3) leads to degraded low-temperature cycling performance and room-temperature cycling performance. This may be because an excessively low amount of the first additive results in an insufficient CEI film, providing insufficient protection to the positive electrode and thus affecting cycling performance, while an excessively high amount of the first additive leads to an excessively thick CEI film, increasing the internal resistance of the positive electrode and thus affecting cycling performance.

Based on the comparison of data from Example 1 and Examples 6 to 8, it can be seen that when the first additive is selected from tris(trimethylsilyl) phosphite or tris(trimethylsilyl) borate, the cycling performance and coulombic efficiency of the battery are particularly outstanding.

Based on the comparison of data from Example 1 and Examples 9 to 12, it can be seen that changes in the amount of the second additive affect the low-temperature cycling performance, the room-temperature cycling performance, and the coulombic efficiency, indicating that the second additive affects both the cycling performance and the capacity overcharge performance of the battery. Especially for capacity overcharge performance, within a certain amount range, as the amount of the second additive increases, the coulombic efficiency of the battery increases, indicating a more significant alleviation in the capacity overcharge of the battery. However, when the amount of the second additive increases from 2% to 5%, although the coulombic efficiency remains above 90%, the coulombic efficiency shows a decline trend; and when the amount of the second additive further increases to 7%, the coulombic efficiency shows a further decline trend.

Based on the comparison of data from Example 1 and Examples 13 to 16, it can be seen that when different fluorinated alkyl ether additives are used as the second additive, the cycling performance and coulombic efficiency of the battery vary, but all contribute to improving cycling performance and coulombic efficiency.

Based on the comparison of data from Example 1 and Examples 17 to 21, it can be seen that, firstly, the use of sodium trifluoromethanesulfonate is conducive to improving the low-temperature cycling performance of the battery; and secondly, sodium trifluoromethanesulfonate has different effects on the low-temperature cycling performance and room-temperature cycling performance of the battery. Within a certain amount range (for example, below 5%), as the amount of sodium trifluoromethanesulfonate increases, the low-temperature cycling performance is significantly improved, but the room-temperature cycling performance is slightly reduced. With a further increase in the amount of sodium trifluoromethanesulfonate (for example, increasing to 10%), the low-temperature cycling performance is not improved, but the room-temperature cycling performance is significantly reduced. This may be because, at low temperatures, sodium trifluoromethanesulfonate has high solubility in the ether organic solvent, and the efficiency of sodium metal deposition and stripping is high, allowing the battery to have good cycling performance at low temperatures, for example (below -30°C). At room temperature, the reactions between sodium trifluoromethanesulfonate and the sodium metal negative electrode intensify, leading to degraded overall cycling performance of the battery.

In addition, from the comparison of data from Example 1 and Examples 17 to 19, it can be seen that when the mass ratio of sodium trifluoromethanesulfonate to diethylene glycol dimethyl ether increases within a certain range, the low-temperature cycling performance of the battery can also be improved. Moreover, based on the comparison of data from Examples 22, 26, and 29 with data from other Examples, it can be seen that the amount of diethylene glycol dimethyl ether has a critical impact on the low-temperature cycling performance of the battery. This may be because diethylene glycol dimethyl ether is a key solvent for dissolving sodium trifluoromethanesulfonate. When sufficient diethylene glycol dimethyl ether is provided to fully dissolve sodium trifluoromethanesulfonate, the effect of sodium trifluoromethanesulfonate in improving the low-temperature cycling performance of the battery is fully exerted. Based on the comparison of data from Examples 25 and 27 with data from other Examples, it can be seen that when diethylene glycol dimethyl ether is absent or its amount is excessively low, the coulombic efficiency of the battery is low, and the increase in electrolyte reaction products accelerates battery degradation, leading to deterioration in both low-temperature cycling performance and room-temperature cycling performance.

Based on the comparison of data from Example 1 and Examples 23 and 24, it can be seen that the composition of the sodium salt has a certain impact on the cycling performance and coulombic efficiency of the battery, but all can contribute to improvements.

Based on the comparison of data from Example 28 with data from other Examples and Comparative Examples, it can be seen that the second additive significantly affects both the cycling performance and coulombic efficiency of the battery. When the second additive is not used, relying on the combination of the first additive and other components, the cycling performance and coulombic efficiency of Example 28 are significantly improved compared to the corresponding performance in Comparative Examples 2 and 3. After the second additive continues to be added, Example 1 shows substantial improvements in low-temperature cycling performance, high-temperature cycling performance, and coulombic efficiency compared to Example 28.

In addition, it should be noted that the coulombic efficiency in each of Examples 28 and 29 is lower than the coulombic efficiency in Comparative Example 1 due to the use of the second additive in Comparative Example 1, which precisely indicates that the second additive can better alleviate the capacity overcharge. However, the cycling performance in each of Examples 28 and 29 is still good, indicating that the first additive can better improve cycling performance (while also improving the coulombic efficiency, but the improvement in cycling performance is more significant).

Based on the comparison of data from Example 1, Example 25, and Example 30, it can be seen that when an equal amount of diethylene glycol dimethyl ether or ethylene glycol dimethyl ether is used to replace ethylene glycol diethyl ether, the cycling performance and coulombic efficiency in Examples 25 and 30 are inferior to those in Example 1 because the oxidation resistance of these two substances is not as good as that of ethylene glycol diethyl ether.

Although this application has been described with reference to preferred embodiments, various improvements can be made, and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A secondary battery, comprising a positive electrode plate, an electrolyte, a separator, and a negative electrode current collector, wherein the electrolyte comprises a non-aqueous solvent, an electrolytic salt, and an additive; the non-aqueous solvent comprises an ether organic solvent; and the additive comprises:
a first additive, wherein the first additive comprises one or more of a phosphite additive or a borate additive.

2. The secondary battery according to claim 1, wherein the secondary battery is a sodium-ion secondary battery; optionally, the secondary battery is an anode-free sodium secondary battery; optionally, the negative electrode current collector comprises a conductive substrate and an optional conductive layer; the conductive layer is disposed on at least one side of the conductive substrate; the conductive substrate comprises any one of bare copper, an aluminum foil, an aluminum alloy foil, and an aluminum-based composite current collector; optionally, the conductive layer comprises a conductive agent and a binder; and further optionally, the conductive agent comprises graphite, graphene, carbon fiber, carbon black, carbon dots, soft carbon, hard carbon, multi-walled carbon nanotubes, or single-walled carbon nanotubes.

3. The secondary battery according to claim 1 or 2, wherein the ether organic solvent comprises one or more of ethylene glycol diethyl ether, ethylene glycol dimethyl ether, diethylene glycol dimethyl ether, tetraethylene glycol dimethyl ether, triethylene glycol dimethyl ether, ethylene glycol ethyl methyl ether, ethylene glycol dibutyl ether, 1,3-dioxolane, 1,4-dioxane, tetrahydrofuran, or methyltetrahydrofuran; optionally, the ether organic solvent comprises ethylene glycol diethyl ether and/or diethylene glycol dimethyl ether; optionally, a mass percentage of ethylene glycol diethyl ether in the electrolyte is greater than or equal to 30%, optionally 40% to 65%; and optionally, a mass percentage of diethylene glycol dimethyl ether in the electrolyte is greater than or equal to 20%, optionally 25% to 40%.

4. The secondary battery according to any one of claims 1 to 3, wherein the phosphite additive comprises one or more of tris(trimethylsilyl) phosphite, trimethyl phosphite, triethyl phosphite, tripropyl phosphite, tributyl phosphite, or triphenyl phosphite.

5. The secondary battery according to any one of claims 1 to 4, wherein the borate additive comprises any one or more of tris(trimethylsilyl) borate, trimethyl borate, triethyl borate, tripropyl borate, tributyl borate, or triphenyl borate.

6. The secondary battery according to any one of claims 1 to 5, wherein the first additive comprises tris(trimethylsilyl) phosphite and/or tris(trimethylsilyl) borate; and/or a mass percentage of the first additive in the electrolyte is 0.2% to 5%, optionally 0.2% to 3%.

7. The secondary battery according to claim 1 or 2, wherein the additive further comprises a second additive, and the second additive comprises a C2-C7 fluorinated alkyl ether additive.

8. The secondary battery according to claim 7, wherein the C2-C7 fluorinated alkyl ether additive comprises any one or more of 1,1,2,2-tetrafluoroethyl methyl ether, 2,2,3,3-tetrafluoropropyl methyl ether, 1,1,2,2-tetrafluoroethyl-2,2,2-trifluoroethyl ether, bis-(2,2,2-trifluoroethyl) ether, 1,1,2,2-tetrafluoroethyl-2,2,3,3-tetrafluoropropyl ether, methyl nonafluorobutyl ether, bis-(1,1,2,2-tetrafluoroethyl) ether, difluoromethyl-2,2,2-trifluoroethyl ether, 1,1,1,3,3,3-hexafluoro-2-(fluoromethoxy)propane, 1, 1,2,3,3,3-pentafluoropropyl-2,2,2-trifluoroethyl ether, 2,2,3,3-tetrafluoropropyl difluoromethyl ether, 2,2,3,3-tetrafluoro-1-methoxypropane, 1, 1,2,3,3,3-pentafluoropropyl ethyl ether, 1,1,2,2-tetrafluoroethyl ethyl ether, 1,1,2,3,3,3-hexafluoropropyl methyl ether, ethyl perfluorobutyl ether, ethyl nonafluorobutyl ether, heptafluoropropyl 1,2,2,2-tetrafluoroethyl ether, 1,1,2,3,3,3-pentafluoropropyl-2,2,2-trifluoroethyl ether, 2,2,3,3,3-pentafluoropropyl difluoromethyl ether, or 2,2,2-trifluoroethyl ethyl ether.

9. The secondary battery according to claim 7 or 8, wherein a mass percentage of the second additive in the electrolyte is 0.2% to 5%, optionally 0.2% to 2%.

10. The secondary battery according to any one of claims 1 to 9, wherein the electrolytic salt comprises an electrolytic sodium salt; optionally, the electrolytic salt comprises one or more of sodium hexafluorophosphate, sodium tetrafluoroborate, sodium hexafluoroarsenate, sodium trifluoroacetate, sodium trifluoromethanesulfonate, or sodium tetraphenylborate; optionally, the electrolytic salt comprises a first sodium salt and sodium trifluoromethanesulfonate; the first sodium salt comprises any one or more of sodium hexafluorophosphate, sodium tetrafluoroborate, or sodium hexafluoroarsenate; optionally, a mass percentage of sodium trifluoromethanesulfonate in the electrolyte is 2% to 10%; and optionally, a mass percentage of the first sodium salt in the electrolyte is 3% to 40%, optionally 5% to 30%.

11. The secondary battery according to any one of claims 3 to 9, wherein in the electrolyte, the electrolytic salt comprises a first sodium salt and sodium trifluoromethanesulfonate; the first sodium salt comprises any one or more of sodium hexafluorophosphate, sodium tetrafluoroborate, or sodium hexafluoroarsenate; optionally, a mass percentage of sodium trifluoromethanesulfonate in the electrolyte is 2% to 10%; optionally, a mass percentage of the first sodium salt in the electrolyte is 3% to 40%, optionally 5% to 30%; and optionally, a mass ratio of sodium trifluoromethanesulfonate to diethylene glycol dimethyl ether is denoted as X, wherein 0.05 ≤ X ≤ 0.2, optionally 0.1 ≤ X ≤ 0.13.

12. The secondary battery according to any one of claims 1 to 11, wherein the positive electrode active material of the positive electrode plate is a layered metal oxide; and optionally, the positive electrode active material comprises one or more of oxides represented by a chemical formula NaₓMnₐQ_{b}O_{2-c-d}F_{c}, wherein 0.5 < x ≤ 1, 0 < a, 0 < b, 0 ≤ c ≤ 0.2, -0.1 ≤ d ≤ 0.1, and Q comprises one or more of the following elements: Li, B, Mg, Al, Si, K, Ca, Ti, Fe, Co, Ni, Cu, Zn, Ga, Y, Zr, Nb, Mo, In, Sn, Sb, La, Ce, Ta, W, and Bi.

13. An electrolyte, comprising a non-aqueous solvent, an electrolytic salt, and an additive, wherein the non-aqueous solvent comprises an ether organic solvent; and the additive comprises:
a first additive, wherein the first additive comprises one or more of a phosphite additive or a borate additive.

14. The electrolyte according to claim 13, wherein the ether organic solvent comprises one or more of ethylene glycol diethyl ether, ethylene glycol dimethyl ether, diethylene glycol dimethyl ether, tetraethylene glycol dimethyl ether, triethylene glycol dimethyl ether, ethylene glycol ethyl methyl ether, ethylene glycol dibutyl ether, 1,3-dioxolane, 1,4-dioxane, tetrahydrofuran, or methyltetrahydrofuran; optionally, the ether organic solvent comprises ethylene glycol diethyl ether and/or diethylene glycol dimethyl ether; optionally, a mass percentage of ethylene glycol diethyl ether in the electrolyte is greater than or equal to 30%, optionally 40% to 65%; and optionally, a mass percentage of diethylene glycol dimethyl ether in the electrolyte is greater than or equal to 20%, optionally 25% to 40%.

15. The electrolyte according to claim 13 or 14, wherein the phosphite additive comprises one or more of tris(trimethylsilyl) phosphite, trimethyl phosphite, triethyl phosphite, tripropyl phosphite, tributyl phosphite, or triphenyl phosphite.

16. The electrolyte according to any one of claims 13 to 15, wherein the borate additive comprises any one or more of tris(trimethylsilyl) borate, trimethyl borate, triethyl borate, tripropyl borate, tributyl borate, or triphenyl borate.

17. The electrolyte according to any one of claims 13 to 16, wherein the first additive comprises tris(trimethylsilyl) phosphite and/or tris(trimethylsilyl) borate; and/or a mass percentage of the first additive in the electrolyte is 0.2% to 5%, optionally 0.2% to 3%.

18. The electrolyte according to any one of claims 13 to 17, wherein the additive further comprises a second additive, and the second additive comprises a C2-C7 fluorinated alkyl ether additive.

19. The electrolyte according to claim 18, wherein the C2-C7 fluorinated alkyl ether additive comprises any one or more of 1,1,2,2-tetrafluoroethyl methyl ether, 2,2,3,3-tetrafluoropropyl methyl ether, 1,1,2,2-tetrafluoroethyl-2,2,2-trifluoroethyl ether, bis-(2,2,2-trifluoroethyl) ether, 1,1,2,2-tetrafluoroethyl-2,2,3,3-tetrafluoropropyl ether, methyl nonafluorobutyl ether, bis-(1,1,2,2-tetrafluoroethyl) ether, difluoromethyl-2,2,2-trifluoroethyl ether, 1,1,1,3,3,3-hexafluoro-2-(fluoromethoxy)propane, 1,1,2,3,3,3-pentafluoropropyl-2,2,2-trifluoroethyl ether, 2,2,3,3-tetrafluoropropyl difluoromethyl ether, 2,2,3,3-tetrafluoro-1-methoxypropane, 1,1,2,3,3,3-pentafluoropropyl ethyl ether, 1,1,2,2-tetrafluoroethyl ethyl ether, 1,1,2,3,3,3-hexafluoropropyl methyl ether, ethyl perfluorobutyl ether, ethyl nonafluorobutyl ether, heptafluoropropyl 1,2,2,2-tetrafluoroethyl ether, 1,1,2,3,3,3-pentafluoropropyl-2,2,2-trifluoroethyl ether, 2,2,3,3,3-pentafluoropropyl difluoromethyl ether, or 2,2,2-trifluoroethyl ethyl ether.

20. The electrolyte according to claim 18 or 19, wherein a mass percentage of the second additive in the electrolyte is 0.2% to 5%, optionally 0.2% to 2%.

21. The electrolyte according to any one of claims 13 to 20, wherein the electrolytic salt comprises an electrolytic sodium salt; optionally, the electrolytic salt comprises one or more of sodium hexafluorophosphate, sodium tetrafluoroborate, sodium hexafluoroarsenate, sodium trifluoroacetate, sodium trifluoromethanesulfonate, or sodium tetraphenylborate; optionally, the electrolytic salt comprises a first sodium salt and sodium trifluoromethanesulfonate; the first sodium salt comprises any one or more of sodium hexafluorophosphate, sodium tetrafluoroborate, or sodium hexafluoroarsenate; optionally, a mass percentage of sodium trifluoromethanesulfonate in the electrolyte is 2% to 10%; and optionally, a mass percentage of the first sodium salt in the electrolyte is 3% to 40%, optionally 5% to 30%.

22. The electrolyte according to any one of claims 14 to 20, wherein in the electrolyte, the electrolytic salt comprises a first sodium salt and sodium trifluoromethanesulfonate; the first sodium salt comprises any one or more of sodium hexafluorophosphate, sodium tetrafluoroborate, or sodium hexafluoroarsenate; optionally, a mass percentage of sodium trifluoromethanesulfonate in the electrolyte is 2% to 10%; optionally, a mass percentage of the first sodium salt in the electrolyte is 3% to 40%, optionally 5% to 30%; and optionally, a mass ratio of sodium trifluoromethanesulfonate to diethylene glycol dimethyl ether is denoted as X, wherein 0.05 ≤ X ≤ 0.2, optionally 0.1 ≤ X ≤ 0.13.

23. An electric apparatus, comprising a secondary battery, wherein the secondary battery is the secondary battery according to claims 1 to 12.
